# EUROPÄISCHE PATENTANMELDUNG

(11) **EP 1 508 421 A2**
(43) Veröffentlichungstag der Anmeldung: **23.02.2005**
(21) Anmeldenummer: 04019107.4
(22) Anmeldetag: 12.08.2004
(51) Int. Cl.: B29C 44/16

(54) **Hinterschäumtes Bauteil und zugehöriges Herstellungsverfahren**

(30) Priorität: 21.08.2003 DE 10338812
(71) Anmelder: DaimlerChrysler AG, 70567 Stuttgart (DE)
(72) Erfinder: Fischer, Jan, 72072 Tübingen (DE); Poppelaars, Josephus Petrus Johannes, 5616 Meisterschwanden (CH)
(74) Vertreter: Patentanwalts-Partnerschaft, Rotermund + Pfusch + Bernhard

(57) **Zusammenfassung**

Die vorliegende Erfindung betrifft ein Verfahren zur Herstellung eines hinterschäumten Bauteils (2), insbesondere eines Innenraumverkleidungsteils eines Kraftfahrzeugs. Hierbei wird ein Stoffbahnabschnitt (11), der beim fertigen Bauteil (2) eine Außenhaut des Bauteils (2) bildet, an einer Innenseite (18) eines Tragrahmens (8) befestigt, der beim fertigen Bauteil (2) mit einer Außenseite (13) zur Anbringung des Bauteils (2) an einer Tragstruktur dient. In einem Formwerkzeug (1), dessen Innenkontur (5) einen Hohlraum ausbildet und in dem der Tragrahmen (8) mit an der Innenkontur (5) anliegender Außenseite (13) angeordnet ist, wird der Stoffbahnabschnitt (11) so ausgeschäumt, dass er an der Innenkontur (5) zur Anlage kommt.

## Beschreibung

Die vorliegende Erfindung betrifft ein hinterschäumtes Bauteil sowie ein Verfahren zur Herstellung eines hinterschäumten Bauteils, insbesondere eines Innenraumverkleidungsteils eines Kraftfahrzeugs.

Hinterschäumte Bauteile besitzen eine Außenhaut, die aus einem Stoffbahnabschnitt gebildet ist, sowie eine Schaumfüllung. Die Außenhaut kann grundsätzlich geschlossen sein und sich über die gesamte Oberfläche des Bauteils erstrecken. Ebenso kann das Bauteil einseitig oder mehrseitig offen sein, so dass sich die Außenhaut nicht über die gesamte Oberfläche des Bauteils erstreckt. Vorzugsweise kann ein derartiges hinterschäumtes Bauteil als Verkleidungsteil, insbesondere zur Innenraumverkleidung in einem Kraftfahrzeug, verwendet werden. Derartige Verkleidungsteile müssen an einer entsprechenden Tragstruktur angebracht werden, um die gewünschte Verkleidung auszubilden. Der Stoffbahnabschnitt kann grundsätzlich aus einem beliebigen Material hergestellt und grundsätzlich mit einer beliebigen Oberflächenstruktur ausgestaltet sein, wodurch die im jeweiligen Anwendungsfall sichtbare Außenhaut des Bauteils nach ästhetischen Gesichtspunkten gestaltet werden kann. Die Schaumfüllung spannt die Außenhaut und kann insbesondere energieabsorbierend gestaltet sein.

Aus der DE 43 16 536 A1 ist ein Verfahren zur Herstellung eines derartigen hinterschäumten Bauteils bekannt, bei dem in eine untere Formhälfte zunächst ein Deckschichtmaterial eingesprüht wird, das nach dem Aushärten beim fertigen Bauteil eine Außenhaut des Bauteils bildet. Auf die Deckschicht wird dann ein aufschäumbares Material eingefüllt. Beim Schließen der Form wird die Deckschicht an ihrem Rand abgeschert, wobei der verbleibende Rand vor dem Aufschäumen des eingefüllten Materials nach innen umgebogen wird. Die Verklebung zwischen der umgebogenen Deckschicht und einem an der oberen Formhälfte befestigten Trägerteil erfolgt mit Hilfe des aufschäumenden Materials. Der Aufwand zur Herstellung eines Formwerkzeugs, das den Außenrand der Deckschicht abscheren, nach innen umbiegen und bis zum Aushärten des aufgeschäumten Materials in der gewünschten Weise positionieren kann, ist relativ groß.

Aus der DE 100 24 814 A1 ist ein weiteres Verfahren zur Herstellung eines hinterschäumten Bauteils bekannt, bei dem in ein zweiteiliges Formwerkzeug zunächst zwei Stoffbahnabschnitte eingelegt werden, wobei die Stoffbahnabschnitte aus einem von den Werkzeughälften gebildeten Hohlraum herausgeführt sind und in einer Trennebene der Werkzeughälften aufeinanderliegen. Anschließend wird zwischen den beiden Stoffbahnabschnitten ein aufschäumendes Material eingebracht, wodurch sich die Stoffbahnabschnitte an den Innenkonturen der beiden Werkzeughälften anlegen. Nach dem Entnehmen des Bauteils aus dem Formwerkzeug müssen nur noch die Außenränder, die bei geschlossener Form in der Trennebene der Werkzeughälften aufeinanderlagen, entfernt werden, wozu jedoch ein zusätzlicher Arbeitsgang erforderlich ist.

Die vorliegende Erfindung beschäftigt sich mit dem Problem, für ein Verfahren der eingangs genannten Art eine verbesserte Ausführungsform anzugeben, die insbesondere eine preiswerte Herstellung hinterschäumter Bauteile ermöglicht.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den die Außenhaut des fertigen Bauteils bildenden Stoffbahnabschnitt vor dem Ausschäumen an einem Tragrahmen zu befestigen. Durch das Ausschäumen wird dieser Tragrahmen zu einem integralen Bestandteil des Bauteils. Des Weiteren befindet sich beim erfindungsgemäß hergestellten Bauteil ein an einer Innenseite des Tragrahmens befestigter Außenrand des Stoffbahnabschnitts im Inneren des Bauteils, das heißt, der Außenrand des Stoffbahnabschnitts ist im Schaum eingebettet und nicht einsehbar. Diese Vorgehensweise hat den Vorteil, dass eine Nachbearbeitung, insbesondere ein sauberes Abschneiden überstehender Ränder, beim erfindungsgemäß hergestellten Bauteil nicht erforderlich ist.

Bei einer vorteilhaften Weiterbildung kann der Stoffbahnabschnitt zur Befestigung an der Innenseite des Tragrahmens auf diese aufgelegt und damit verschweißt werden. Durch die Verschweißung ergibt sich eine besonders intensive und haltbare Verbindung zwischen dem Stoffbahnabschnitt und dem Tragrahmen. Zweckmäßig besteht dazu wenigstens eine der beiden miteinander verschweißten Komponenten aus einem thermoplastischen Kunststoff.

Gemäß einer zweckmäßigen Weiterbildung kann der Stoffbahnabschnitt so an der Innenseite des Tragrahmens angeordnet werden, dass der Außenrand des Stoffbahnabschnitts über die Außenkante des Tragrahmens übersteht, wobei dann der Stoffbahnabschnitt an seinem Außenrand vor dem Ausschäumen bündig zur Außenkante des Tragrahmens geschnitten wird. Durch die Beschneidung vor dem Ausschäumen kann die Reproduzierbarkeit einer fehlerfreien Außenhaut des fertig gestellten Bauteils erhöht werden.

Bei einer anderen Weiterbildung können das Anschweißen des Stoffbahnabschnitts am Tragrahmen und das Schneiden des Außenrands des Stoffbahnabschnitts in einem einzigen Arbeitsgang durchgeführt werden, wodurch sich ein erheblicher Zeitvorteil ergibt.

Eine andere Ausführungsform zeichnet sich dadurch aus, dass der Tragrahmen im Bauteil versenkt angeordnet ist, wodurch die Außenseite des Tragrahmen flächenbündig mit einer Rückseite des Bauteils abschließt. Durch die versenkte Anordnung des Tragrahmens im Bauteil wird der Integrationsgrad für den Tragrahmen zumindest optisch erhöht.

Bei einer Weiterbildung kann der Tragrahmen außerdem an der Rückseite des Bauteils an seiner Innenkante vom Schaumstoff und an seiner Außenkante vom Stoffbahnabschnitt eingefaßt sein. Durch diese Vorgehensweise ist am fertigen Bauteil die Verbindungsstelle zwischen Stoffbahnabschnitt und Tragrahmen vollständig im Inneren des Bauteils und somit nicht einsehbar angeordnet. Diese Eigenschaft ist insbesondere für ein Verkleidungsteil von erhöhter Bedeutung, da sich hierdurch ein Verkleidungsteil herstellen lässt, das auch in einem Übergangsbereich von der sichtbaren Außenhaut zur verdeckten Rückseite integral geformt und somit optisch und haptisch vorteilhaft gestaltet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

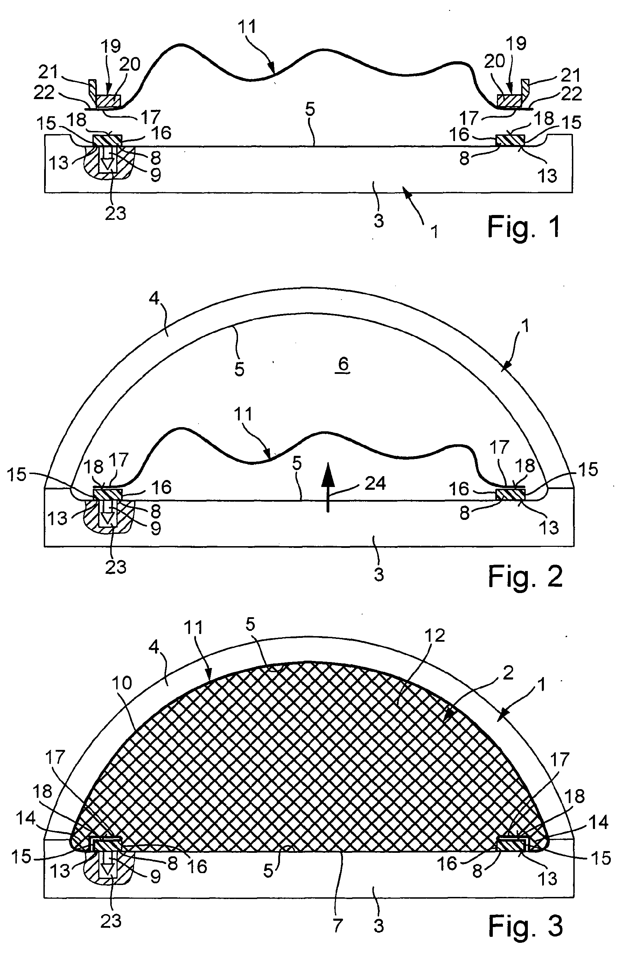

Es zeigen, jeweils schematisch
- Fig. 1 bis 3: Querschnitte durch stark vereinfachte Prinzipdarstellungen eines Formwerkzeugs bei unterschiedlichen Phasen des erfindungsgemäßen Herstellungsverfahrens.

Entsprechend den Fig. 1 bis 3 ist ein Formwerkzeug 1 zur Herstellung eines hinterschäumten Bauteils 2 (vgl. Fig. 3) mehrteilig, zweckmäßig zweiteilig, aufgebaut. Dementsprechend besitzt das Formwerkzeug 1 hier ein Unterteil 3 und ein Oberteil 4. Die beiden Hälften (Unterteil 3 und Oberteil 4) des Formwerkzeugs 1 definieren eine Innenkontur 5 des Formwerkzeugs 1. Bei geschlossenem Formwerkzeug 1 bildet diese Innenkontur 5 der Hälften 3, 4 gemäß den Fig. 2 und 3 einen Hohlraum 6 des Formwerkzeugs 1.

Entsprechend Fig. 3 weist das fertige Bauteil 2 an einer Rückseite 7 einen Tragrahmen 8 auf. Dieser Tragrahmen 8 kann einteilig oder mehrteilig ausgebildet sein. Bevorzugt wird eine Ausführungsform, bei welcher der Tragrahmen 8 als geschlossener Ring ausgestaltet ist. Der Tragrahmen 8 dient dazu, das fertige Bauteil 2 an einer hier nicht gezeigten Tragstruktur anzubringen. Beispielsweise kann das Bauteil 2 mit Hilfe des Tragrahmens 8 an einem zu verblendendem Karosserieblech eines Kraftfahrzeuges angebracht werden. Zu diesem Zweck kann der Tragrahmen 8 mit einem oder mit mehreren Befestigungselementen 9 ausgestattet sein, die grundsätzlich einen beliebigen Aufbau aufweisen können. Beispielsweise handelt es sich bei den Befestigungselementen 9 um eine Gewindeöffnung oder um einen Gewindebolzen oder - wie hier - um einen pilzartigen Zapfen einer Clipverbindung. Zweckmäßig ist das jeweilige Befestigungselement 9 einstückig am Tragrahmen 8 ausgebildet. Beispielsweise handelt es sich beim Tragrahmen 8 um ein spritzgußgeformtes Kunststoffbauteil, beispielsweise aus Polypropylen.

An seiner von der Rückseite 7 abgewandten Vorderseite 10 weist das fertige Bauteil 2 einen Stoffbahnabschnitt 11 auf. Dieser Stoffbahnabschnitt 11 bildet bis zum Tragrahmen 8 eine Außenhaut des Bauteils 2. Die Außenhaut bzw. der Stoffbahnabschnitt 11 ist mit einem Schaumkörper 12 bzw. mit einer Schaumfüllung 12 ausgeschäumt, die das Innere des Bauteils 2 bildet. Da sich die Schaumfüllung 12 auf der von einem Betrachter der Außenhaut abgewandten Seite, also hinter der Außenhaut befindet, ist der Stoffbahnabschnitt 11 hinterschäumt.

Gemäß Fig. 3 ist bei der hier gezeigten, bevorzugten Ausführungsform das Bauteil 2 so ausgebildet, dass der Tragrahmen 8 im Schaumkörper 12 versenkt angeordnet ist. Dementsprechend schließt eine Außenseite 13 des Tragrahmens 8 flächenbündig mit der Rückseite 7 des Bauteils 2 ab. Des Weiteren ist der Tragrahmen 8 innerhalb der Rückseite 7 bezüglich eines Randbereichs 14 des Bauteils 2 nach innen versetzt angeordnet. Auf diese Weise ist der Tragrahmen 8 an seiner dem Stoffbahnabschnitt 11 zugewandten Außenkante 15 vom Stoffbahnabschnitt 11 einfaßt und an seiner vom Stoffbahnabschnitt 11 abgewandten Innenkante 16 vom Schaumstoff bzw. vom Schaumkörper 12 eingefaßt. Das fertige Bauteil 2 besitzt durch diese Ausgestaltung einen formintegrierten Tragrahmen 8 mit einem ästhetisch vorteilhaften Übergang zwischen der im Einbauzustand einem Betrachter zugewandten Außenseite 10 und der im eingebauten Zustand vom Betrachter nicht einsehbaren Rückseite 7.

Das erfindungsgemäße Verfahren zur Herstellung des hinterschäumten Bauteils 2 funktioniert wie folgt:

Gemäß Fig. 1 wird der Stoffbahnabschnitt 11 zunächst am Tragrahmen 8 befestigt. Der Stoffbahnabschnitt 11 ist dazu vorab in geeigneter Weise zugeschnitten worden und wird im Bereich eines Außenrands 17 auf eine Innenseite 18 des Tragrahmens 8 aufgelegt. Hierzu kann - wie hier angedeutet - ein entsprechendes Werkzeug 19 verwendet werden. Im vorliegenden Fall ist diese Innenseite 18 von der Außenseite 13 abgewandt. Zusätzlich oder alternativ kann eine Innenseite verwendet werden, die an die Außenseite 13 anschließt. Der Zuschnitt des Stoffbahnabschnitts 11 ist üblicherweise so dimensioniert, dass sein Außenrand 17 über die Außenkante 15 des Tragrahmens 8 übersteht, wenn der Außenrand 17 auf die Innenseite 18 aufgelegt ist.

Zum Befestigen des Stoffbahnabschnitts 11 am Tragrahmen 8 kann zweckmäßig eine Schweißverbindung vorgesehen sein. Zu diesem Zweck kann der Stoffbahnabschnitt 11 wie der Tragrahmen 8 aus einem thermoplastischen Kunststoff bestehen. Hierdurch kann eine besonders haltbare stoffschlüssige Verbindung zwischen dem Stoffbahnabschnitt 11 und dem Tragrahmen 8 hergestellt werden. Zweckmäßig umfasst das Werkzeug 19 ein Schweißwerkzeug 20, mit dessen Hilfe der Schweißvorgang durchgeführt werden kann. Beispielsweise können Stoffbahnabschnitt 11 und Tragrahmen 8 durch Ultraschallschweißen miteinander verbunden werden. Alternativ sind auch andere Befestigungsverfahren möglich, zum Beispiel Verkleben.

Bei der hier gezeigten bevorzugten Ausführungsform ist das Werkzeug 19 bzw. das Schweißwerkzeug 20 zusätzlich mit einem Schneidwerkzeug 21 ausgestattet, mit dessen Hilfe ein über die Außenkante 15 des Tragrahmens 8 vorstehender Rest 22 des Außenrands 17 abgeschnitten werden kann, so dass der Stoffbahnabschnitt 11 danach an seinem Außenrand 17 bündig zur Außenkante 15 des Tragrahmens 8 geschnitten ist. Dieser Schneidvorgang kann dabei beim Schweißvorgang oder nach dem Schweißvorgang durchgeführt werden. Ebenso ist es möglich, den Schneidvorgang vor dem Schweißvorgang durchzuführen, sofern das Werkzeug 19 den Außenrand 17 hinreichend fest gegen die Innenseite 18 andrücken kann.

Zweckmäßig werden das Anschweißen und das Abschneiden so aufeinander abgestimmt, dass die beiden Vorgänge in einem einzigen Arbeitsgang durchgeführt werden können. Hierdurch kann die Taktfrequenz für die Herstellung des Bauteils 2 erhöht werden.

Beim Schweißen und/oder beim Schneiden kann der Tragrahmen 8 gemäß Fig. 1 bereits in das Unterteil 3 des Formwerkzeugs 1 eingesetzt sein. Es ist klar, dass das Verbinden zwischen Tragrahmen 8 und Stoffbahnabschnitt 11 und/oder das Beschneiden des Außenrandes 17 auch außerhalb des Formwerkzeugs 1 durchgeführt werden kann.

Sofern der Tragrahmen 8 - wie hier - ein Befestigungselement 9 besitzt, das über die Außenseite 13 des Tragrahmens 8 vorsteht, ist das Unterteil 3 des Formwerkzeugs 1 mit einer entsprechenden Aussparung 23 versehen, in die das Befestigungselement 9 hineinragt, während der Tragrahmen 8 mit seiner Außenseite 13 im Übrigen an der Innenkontur 5 des Unterteils 3 anliegt.

Fig. 2 zeigt den Zustand, der nach dem Schweißen und nach dem Schneiden des Außenrands 17 vorliegt. Des Weiteren ist in Fig. 2 das Formwerkzeug 1 bereits geschlossen. Spätestens jetzt ist der Tragrahmen 8 so im Formwerkzeug 1 angeordnet, dass seine Außenseite 13 flächig an der Innenkontur 5 einer Werkzeughälfte 3 oder 4 anliegt.

Bemerkenswert ist außerdem, dass der Zuschnitt des Stoffbahnabschnitts 11 so an die Innenkontur 5 der Werkzeughälften 3, 4 angepasst ist, dass sich beim nachfolgenden Ausschäumvorgang der Stoffbahnabschnitt 11 ohne Faltenbildung an die Innenkontur 5 anlegen kann. Insbesondere ist der Stoffbahnabschnitt 11 auf dem Tragrahmen 8 ungespannt, also "schlaff" angebracht, so dass er wie in Fig. 2 angedeutet eine wellige Raumstruktur einnehmen kann.

Entsprechend Fig. 2 wird nun der Stoffbahnabschnitt 11 ausgeschäumt, was durch einen Pfeil 24 symbolisiert ist. Das Ausschäumen wird dabei von der späteren Rückseite 7 des fertigen Bauteils 2 her, quasi durch den Tragrahmen 8 hindurch durchgeführt. Durch den sich aufbauenden Druck strafft sich der Stoffbahnabschnitt 11 und legt sich konturgerecht an die Innenkontur 5 des Formwerkzeugs 1 an. Da der Stoffbahnabschnitt 11 so am Tragrahmen 8 angebracht ist, dass sein Außenrand 17 bündig mit der Außenkante 15 des Tragrahmens 8 abschließt, ergibt sich durch das Ausschäumen entlang der Innenseite 18 des Tragrahmens 8 eine Doppellage für den Stoffbahnabschnitt 11.

Für ein verbessertes Ausschäumen kann vor dem Einbringen des Schaumstoffs (Füllphase) ein Unterdruck, insbesondere ein mehr oder weniger starkes Vakuum, im Formwerkzeug 1 ausgebildet werden, derart, dass sich der Stoffbahnabschnitt 11 an die Innenkontur 5 des Formwerkzeugs 1 mehr oder weniger konturgerecht anlegt.

Durch eine entsprechende Steuerung der Verfahrensparameter, insbesondere der Temperatur, kann eine intensive Anbindung des Schaummaterials an den Stoffbahnabschnitt 11 erzielt werden. Insbesondere ist es auch möglich, im Bereich der Doppellage eine Verschweißung und/oder Verklebung der aufeinanderliegenden Schichten des Stoffbahnabschnitts 11 und/oder eine Verschweißung bzw. Verklebung des Stoffbahnabschnitts 11 mit der Außenkante 15 des Tragrahmens 8 zu erzielen.

Die Materialauswahl für den Stoffbahnabschnitt 11 kann zum einen im Hinblick auf eine beabsichtigte Dekorwirkung durchgeführt werden. Zum anderen ist eine hinreichende Elastizität zu berücksichtigen, damit der Stoffbahnabschnitt 11 beim Ausschäumen die Innenkontur 5 vollständig auslegen kann, abgesehen von der offenen Rückseite 7. Der Schaumstoff für den Schaumkörper 12 ist zweckmäßig so gewählt, dass er die durch das Formwerkzeug 1 formgegebene Form des hinterschäumten Bauteils 2 aufrecht erhalten kann. Dabei kann es sich um einen Hartschaum oder um einen Weichschaum handeln. Beispielsweise wird der Schaumkörper 12 aus einem Kunststoff erzeugt, insbesondere aus einem Thermoplast, z.B. aus Polyurethan, vorzugsweise jedoch aus expandiertem Polypropylen (EPP). Insbesondere ist es möglich, den Schaum so auszuwählen, dass das Bauteil 2 eine stoßabsorbierende Wirkung entfalten kann. Dies ist insbesondere bei Innenraumverkleidungsteilen für Kraftfahrzeuge von Vorteil.

Nach dem Aushärten des Schaumkörpers 12 kann das Bauteil 2 dem Formwerkzeug 1 entnommen werden. Eine Nachbearbeitung des hinterschäumten Bauteils 2 ist nicht mehr erforderlich. Insgesamt ergibt sich somit ein vergleichsweise einfach durchführbares Herstellungsverfahren, das eine preiswerte Herstellung des Bauteils 2 ermöglicht.

## Patentansprüche

1. Verfahren zur Herstellung eines hinterschäumten Bauteils (2), insbesondere eines Innenraumverkleidungsteils eines Kraftfahrzeugs,
- bei dem ein Stoffbahnabschnitt (11), der beim fertigen Bauteil (2) eine Außenhaut des Bauteils (2) bildet, an einer Innenseite (18) eines Tragrahmens (8) befestigt wird, der beim fertigen Bauteil (2) mit einer Außenseite (13) zur Anbringung des Bauteils (2) an einer Tragstruktur dient,
- bei dem in einem Formwerkzeug (1), dessen Innenkontur (5) einen Hohlraum (6) ausbildet und in dem der Tragrahmen (8) mit an der Innenkontur (5) anliegender Außenseite (13) angeordnet ist, der Stoffbahnabschnitt (11) so ausgeschäumt wird, dass der Stoffbahnabschnitt (11) an der Innenkontur (5) zur Anlage kommt.

2. Verfahren nach Anspruch 1,
**dadurch gekennzeichnet,**
**dass** der Stoffbahnabschnitt (11) zur Befestigung an der Innenseite (18) des Tragrahmens (8) darauf aufgelegt und damit verschweißt wird.

3. Verfahren nach Anspruch 1 oder 2,
**dadurch gekennzeichnet,**
**dass** der Stoffbahnabschnitt (11) und/oder der Tragrahmen (8) aus einem thermoplastischen Kunststoff besteht/bestehen.

4. Verfahren nach einem der Ansprüche 1 bis 3,
**dadurch gekennzeichnet,**
- **dass** der Stoffbahnabschnitt (11) so an der Innenseite (18) des Tragrahmens (8) angeordnet wird, dass ein Außenrand (17) des Stoffbahnabschnitts (11) über eine Außenkante (15) des Tragrahmens (8) übersteht,
- **dass** der Stoffbahnabschnitt (11) an seinem Außenrand (17) vor dem Ausschäumen bündig zur Außenkante (15) des Tragrahmens (8) geschnitten wird.

5. Verfahren nach Anspruch 4,
**dadurch gekennzeichnet,**
**dass** das Anschweißen des Stoffbahnabschnitts (11) am Tragrahmen (8) und das Schneiden des Außenrands (17) des Stoffbahnabschnitts (11) in einem gemeinsamen Arbeitsgang durchgeführt wird.

6. Verfahren nach Anspruch 4 oder 5,
**dadurch gekennzeichnet,**
**dass** in ein Schweißwerkzeug (20), das zum Anschweißen des Stoffbahnabschnitts (11) an den Tragrahmen (8) dient, ein Schneidwerkzeug (21) integriert ist, das zum Schneiden des Außenrands (17) des Stoffbahnabschnitts (11) dient.

7. Verfahren nach einem der Ansprüche 1 bis 6,
**dadurch gekennzeichnet,**
**dass** der Stoffbahnabschnitt (11) so an der Innenseite (18) des Tragrahmens (8) befestigt ist, dass ein Außenrand (17) des Stoffbahnabschnitts (11) entlang einer Außenkante (15) des Tragrahmens (8) verläuft.

8. Verfahren nach einem der Ansprüche 1 bis 7,
**dadurch gekennzeichnet,**
**dass** der Stoffbahnabschnitt (11) an der Innenseite (18) des Tragrahmens (8) eine Doppellage bildet.

9. Verfahren nach einem der Ansprüche 1 bis 8,
**dadurch gekennzeichnet,**
**dass** der Tragrahmen (8) im Bauteil (2) versenkt angeordnet ist, so dass die Außenseite (13) des Tragrahmens (8) flächenbündig mit einer Rückseite (7) des Bauteils (2) abschließt.

10. Verfahren nach Anspruch 9,
**dadurch gekennzeichnet,**
**dass** der Tragrahmen (8) an der Rückseite (7) des Bauteils (2) an seiner Innenkante (16) vom Schaumstoff und an seiner Außenkante (15) vom Stoffbahnabschnitt (11) eingefaßt ist.

11. Verfahren nach einem der Ansprüche 1 bis 10,
**dadurch gekennzeichnet,**
- **dass** der Tragrahmen (8) an seiner Außenseite (13) wenigstens ein Befestigungselement (9) aufweist, das über die Außenseite (13) vorsteht,
- **dass** das Formwerkzeug (1) an seiner Innenkontur (5) für jedes Befestigungselement (9) eine geeignete Aussparung (23) aufweist, in die das Befestigungselement (9) beim Ausschäumen hineinragt.

12. Verfahren nach einem der Ansprüche 1 bis 11,
**dadurch gekennzeichnet,**
**dass** der Tragrahmen (8) als geschlossener Ring ausgestaltet ist.

13. Hinterschäumtes Bauteil, insbesondere Innenraumverkleidungsteil eines Kraftfahrzeugs, mit einem Stoffbahnabschnitt (11), der einen Schaumkörper (12) an einer Vorderseite (10) des Bauteils (2) umhüllt und an einer Innenseite (18) eines Tragrahmens (8) befestigt ist, der an einer Rückseite (7) des Bauteils (2) angeordnet ist und mit einer Außenseite (13) zur Anbindung des Bauteils (2) an einer Tragstruktur ausgebildet ist.

14. Bauteil nach Anspruch 13,
**dadurch gekennzeichnet,**
**dass** der Stoffbahnabschnitt (11) an der Innenseite (18) des Tragrahmens (8) angeschweißt ist.

15. Bauteil nach Anspruch 13 oder 14,
**dadurch gekennzeichnet,**
**dass** der Stoffbahnabschnitt (11) und/oder der Tragrahmen (8) aus einem thermoplastischen Kunststoff besteht/bestehen.

16. Bauteil nach einem der Ansprüche 13 bis 15,
**dadurch gekennzeichnet,**
**dass** der Stoffbahnabschnitt (11) so an der Innenseite (18) des Tragrahmens (8) angeordnet ist, dass ein Außenrand (17) des Stoffbahnabschnitts (11) bündig zu einer Außenkante (15) des Tragrahmens (8) verläuft.

17. Bauteil nach einem Ansprüche 13 bis 16,
**dadurch gekennzeichnet,**
**dass** der Stoffbahnabschnitt (11) so an der Innenseite (18) des Tragrahmens (8) befestigt ist, dass ein Außenrand (17) des Stoffbahnabschnitts (11) entlang einer Außenkante (15) des Tragrahmens (8) verläuft.

18. Bauteil nach einem der Ansprüche 13 bis 17,
**dadurch gekennzeichnet,**
**dass** der Stoffbahnabschnitt (11) an der Innenseite (18) des Tragrahmens (8) eine Doppellage bildet.

19. Bauteil nach einem der Ansprüche 13 bis 18,
**dadurch gekennzeichnet,**
**dass** der Tragrahmen (8) im Bauteil (2) versenkt angeordnet ist, so dass die Außenseite (13) des Tragrahmens (8) flächenbündig mit der Rückseite (7) des Bauteils (2) abschließt.

20. Bauteil nach Anspruch 19,
**dadurch gekennzeichnet,**
**dass** der Tragrahmen (8) an der Rückseite (7) des Bauteils (2) an seiner Innenkante (16) vom Schaumkörper (12) und an seiner Außenkante (15) vom Stoffbahnabschnitt (11) einfasst ist.

21. Bauteil nach einem der Ansprüche 13 bis 20,
**dadurch gekennzeichnet,**
**dass** der Tragrahmen (8) an seiner Außenseite (13) wenigstens ein Befestigungselement (9) aufweist, das über die Außenseite (13) vorsteht.

22. Bauteil nach Anspruch 21,
**dadurch gekennzeichnet,**
**dass** das Befestigungselement (9) einstückig am Tragrahmen (8) ausgebildet ist.

23. Bauteil nach einem der Ansprüche 13 bis 22,
**dadurch gekennzeichnet,**
**dass** der Tragrahmen (8) als geschlossener Ring ausgestaltet ist.
